# EUROPÄISCHE PATENTANMELDUNG

(11) **EP 4 671 432 A1**
(43) Veröffentlichungstag der Anmeldung: **31.12.2025**
(21) Anmeldenummer: 25180442.3
(22) Anmeldetag: 03.06.2025
(51) Int. Cl.: D06F 67/04

(54) **VERFAHREN UND VORRICHTUNG ZUM ZUFÜHREN RECHTECKIGER TEXTILER GEGENSTÄNDE ZU EINER EINGABEEINRICHTUNG**

(30) Priorität: 18.06.2024 DE 102024117155
(71) Anmelder: Herbert Kannegiesser GmbH, 32602 Vlotho (DE)
(72) Erfinder: Heinz, Engelbert, 32602 Vlotho (DE); Nolte, Markus, 32479 Hille (DE); Greber, Martin, 18055 Rostock (DE); Richter, Andreas, 18069 Rostock (DE)
(74) Vertreter: Hoener, Matthias

(57) **Zusammenfassung**

Die Erfindung schafft ein Verfahren und eine Vorrichtung zum raschen und zuverlässigen automatischen Zuführen textiler Gegenstände zu einer Eingabeeinrichtung zu schaffen. Das wird dadurch erreicht, dass zum automatischen Zuführen rechteckiger textiler Gegenstände zu einer Eingabeeinrichtung die vereinzelten textilen Gegenstände an einem Abschnitt eines Randes ergriffen werden. Darauffolgend wird der textile Gegenstand über einen Förderer (24) aufgezogen, um den Gegenstand zu einer Bearbeitungseinrichtung zu transportieren. Dazu wird der textile Gegenstand zunächst an einem Eckbereich (12) in einer Klammer (31) hängend einer Aufziehposition (32) zugeführt und in dieser Aufziehposition (32) eine obere Schlaufe (14) des hängenden textilen Gegenstands ermittelt. Diese obere Schlaufe (14) des Gegenstandes wird von einem Greifer (29) erfasst und der an der Klammer (31) hängende textile Gegenstand aufgespannt. Der Greifer (29) und die Klammer (31) ziehen den aufgespannten oder aufzuspannenden textilen Gegenstand in einer synchronisierten Bewegung über den Förderer (24).

## Beschreibung

Die Erfindung betrifft ein Verfahren zum Zuführen eines rechteckigen textilen Gegenstands gemäß dem Oberbegriff des Anspruchs 1. Des Weiteren betrifft die Erfindung eine Vorrichtung zum Ergreifen rechteckiger textiler Gegenstände gemäß dem Oberbegriff des Anspruchs 13.

Textile Gegenstände, insbesondere zu waschende und/oder gewaschene Wäschestücke, mit einer rechteckigen Gestalt müssen so ergriffen werden, dass sie einer Eingabeeinrichtung oder einer Behandlungseinrichtung für die weitere Bearbeitung zuführbar sind. Das gilt insbesondere für rechteckige textile Gegenstände, die gleich lange oder ungleich lange rechtwinklig zueinander verlaufende Ränder aufweisen. Insbesondere die Handhabung von quadratischen Wäschestücken gestaltet sich als sehr aufwendig, da die Erkennung der bevorzugt zu ergreifenden Eckbereiche schwer ist.

Es ist beabsichtigt, rechteckige textile Gegenstände automatisch zu ergreifen und automatisch einer Eingabeeinrichtung zuzuführen. Es hat sich aber gezeigt, dass das bislang zeitaufwendig und unzuverlässig ist. Insbesondere das Ergreifen des textilen Gegenstandes mit einem Greifer erfordert, dass der textile Gegenstand entsprechend ausgerichtet ist und eine geeignete Stelle zur Verfügung steht, an welcher der Greifer ansetzen kann. Auch das Erkennen einer bevorzugten Position zum Ergreifen des Wäschestücks gestaltet sich als sehr aufwendig, da die Gegenstände in der Regel eine nahezu beliebige Form einnehmen und aus dieser Vielfalt von Formen geeignete Positionen zum Ergreifen zu bestimmen sind.

Der Erfindung liegt die Aufgabe zugrunde, ein Verfahren und eine Vorrichtung zum raschen und zuverlässigen automatischen Zuführen textiler Gegenstände zu einer Eingabeeinrichtung zu schaffen.

Ein Verfahren zur Lösung der Aufgabe weist die Maßnahmen des Anspruchs 1 auf. Demnach ist es vorgesehen, zum automatischen Zuführen rechteckiger textiler Gegenstände, insbesondere Wäschestücke, vorzugsweise Laken, Tischdecken oder dergleichen, zu einer Eingabeeinrichtung die vereinzelten textilen Gegenstände an einem Abschnitt eines Randes zu ergreifen. Darauffolgend wird der textile Gegenstand über einen Förderer aufgezogen, um den Gegenstand zu einer Bearbeitungseinrichtung zu transportieren. Dazu wird der textile Gegenstand zunächst an einem Eckbereich, insbesondere an einer Ecke, in einer Klammer hängend einer Aufziehposition zugeführt und in dieser Aufziehposition eine obere Schlaufe des hängenden textilen Gegenstands ermittelt. Diese obere Schlaufe des Gegenstandes wird von einem Greifer erfasst und der an der Klammer hängende textile Gegenstand aufgespannt. Der Greifer und die Klammer ziehen den aufgespannten oder aufzuspannenden textilen Gegenstand in einer synchronisierten Bewegung über den Förderer. Dadurch, dass der Gegenstand zu Beginn dieses Verfahrens an einem Eckbereich oder einer Ecke an der Klammer hängt, bildet sich ein benachbarter Eckbereich bzw. eine benachbarte Ecke direkt unterhalb des in der Klammer hängenden Eckbereichs aus. Dieser herabhängende Eckbereich bildet die Schlaufe, die besonders gut als solche ermittelbar ist und durch den Greifer ergreifbar ist. Während des beschriebenen Verfahrens ist ein Lösen oder ein Umfassen eines Greifers oder einer Klammer nicht notwendig. Der einmal durch die Klammer und den Greifer ergriffene Gegenstand wird in diesem erfassten Zustand bis zum Förderer geführt. Somit ist für dieses Verfahren lediglich ein Greifprozess notwendig. Zu Beginn des Verfahrens bzw. vor dem Verfahren wird der Gegenstand manuell oder von einem weiteren hier nicht näher beschriebenen automatischen Vorgang in die Klammer geführt. Durch dieses sehr zeiteffiziente und einfache Verfahren kann auf die bisherigen aufwändigen Zwischenschritte verzichtet werden. Darüber hinaus können durch dieses Verfahren insbesondere auch quadratische textile Gegenstände bzw. Wäschestücke gehandhabt werden.

Bevorzugt sieht es das Verfahren vor, dass ein oder mehrere beabstandete textile Gegenstände an einem Transportsystem, vorzugsweise einem Schienensystem oder einem Greifer eines Roboterarmes, hängend der Aufziehposition zugeführt werden. Dabei wird eine Vielzahl von Klammern in dem Schienensystem mit einem ausreichenden Abstand zueinander automatisch der Aufziehposition zugeführt. Dabei können das Transportsystem bzw. das Schienensystem derart ausgebildet sein, dass die Geschwindigkeit der Klammern variierbar ist bzw. dass die Klammern in ihrer Bewegung gestoppt oder sogar gedreht werden können. Es ist ein Transportsystem denkbar, bei dem zwei oder mehr Schienensysteme parallel zueinander verlaufen und somit die Anzahl der zu der Aufziehposition transportierbaren Wäschestücke erhöht werden kann. Da ein Schienensystem sehr kompakt ausgestattet werden kann, kann das hier beschriebene Verfahren sehr platzsparend durchgeführt werden.

Insbesondere sieht es die Erfindung vor, dass der textile Gegenstand von einer oder zwei oder mehr Kameras, vorzugsweise einer 3-D Kamera, insbesondere aus verschiedenen Richtungen erfasst und die obere Schlaufe des hängenden Gegenstandes ermittelt wird, wobei dazu insbesondere ein Algorithmus zur Mustererkennung eingesetzt wird. Für den Fall, dass der Gegenstand derart orientiert ist, dass aus einer bestimmten Richtung keine Schlaufe erkennbar ist, kann es vorteilhaft sein, wenn eine zweite Kamera derart positioniert ist, dass ein für die andere Kamera nicht einsehbarer Bereich abgedeckt ist. Außerdem ist es denkbar, dass durch zwei oder mehr Kameras ein wenigstens nahezu räumliches Abbild des Gegenstandes erzeugbar ist, sodass auf eine noch verlässlichere Art und Weise eine Position zum Ergreifen des Gegenstandes durch den Greifer ermittelbar ist. Alternativ oder zusätzlich ist es denkbar, dass der Gegenstand drehbar gelagert ist, sodass nach einer Drehung eine zweite Aufnahme des Gegenstandes durch die eine oder mehrere Kameras erzeugbar ist, um eine besonders geeignete Position zum Ergreifen des Gegenstandes zu ermitteln. Für die Ermittlung dieser Position kann ein neuronales Netzwerk bzw. eine Mustererkennung basierend auf einer künstlichen Intelligenz eingesetzt werden. Durch die Anwendung dieser lernenden Mustererkennung lässt sich der Gegenstand besonders verlässlich ergreifen. Der Prozessor für die Durchführung dieser Erkennung kann Bestandteil der Maschine oder dezentral auf einem externen Server installiert sein.

Dementsprechend kann es die Erfindung vorsehen, dass für den Fall, in dem keine obere Schlaufe durch die Kamera erkannt wird, der Gegenstand oder die Klammer, insbesondere die in der Schiene hängende Klammer, vorzugsweise um +/- 45°, +/- 90° oder +/- 180° um eine horizontale Achse des Gegenstandes gedreht wird, bis eine obere Schlaufe erkannt wird. Ein Vorteil des Ausführungsbeispiels kann es vorsehen, dass der Gegenstand schrittweise um einen Winkelbereich, beispielsweise 45°, gedreht und nach jeder Teildrehung überprüft wird, ob eine Schlaufe erkennbar ist. Wenn eine Schlaufe erkannt wird, kann noch ermittelt werden, ob sich diese Schlaufe eignet, um von dem Greifer ergriffen zu werden. Dabei wird auch die momentane Position des Greifers berücksichtigt. Wenn aufgrund der relativen Positionierung der Schlaufe und des Greifers ein Ergreifen zu zeitaufwendig wäre, ist es denkbar, dass das Wäschestück noch weiter gedreht wird.

Ein besonders bevorzugtes Ausführungsbeispiel der Erfindung sieht es vor, dass der Greifer automatisch durch einen Roboterarm an die zu ergreifende Schlaufe herangefahren wird. Dabei befindet sich der Roboter mit dem Roboterarm bzw. der Roboterarm in der Nähe des Transportsystems bzw. der Schiene. Für den Fall, dass zwei Schienensysteme vorgesehen sind, befindet sich der Roboterarm zwischen diesen beiden Schienen, sodass abwechselnd bzw. auf eine zeiteffiziente Art und Weise jede Schiene durch den Roboterarm bzw. den Greifer bedienbar ist. Bei dem Roboterarm handelt es sich um einen mehrachsigen Arm, der sich bzw. den Greifer im dreidimensionalen Raum positionieren kann. Vorzugsweise weist der Roboterarm sechs Achsen mit entsprechenden Aktuatoren auf. Über eine Steuereinheit lässt sich dieser Roboterarm mitsamt dem Greifer in Abhängigkeit von der ermittelten Position zum Ergreifen des Gegenstandes steuern. Der Greifer ist dabei als einfacher Greifer mit einem einfachen Greifmaul ausgebildet. Das hat den Vorteil gegenüber einem Greifer mit zwei Greifmäulern, dass ein kleinerer Randbereich ausreicht, um das Wäschestück zu ergreifen.

Ein besonders bevorzugter Schritt der Erfindung besteht darin, dass der Roboterarm mit dem Greifer eine den Gegenstand aufspannende Bewegung durchführt, wobei die Bewegung derart erfolgt, dass zwei Ränder bzw. Kanten des Gegenstandes wenigstens nahezu parallel zueinander ausgerichtet werden. Dabei wird der ergriffene Gegenstand von dem Greifer auf einer Kreisbahn bewegt, wobei der Radius dieser Kreisbahn durch den Abstand zwischen der Klammer und dem Greifer gebildet wird. Diese schwenkende Bewegung des Greifers erfolgt entgegen der Transportrichtung des Gegenstandes. Dadurch, dass der Gegenstand bereits mit einem Eckbereich durch die Klammer erfasst ist und die obere Schlaufe von dem Greifer ergriffen wird, ist der Gegenstand an zwei benachbarten Bereichen ergriffen. Durch das Aufspannen des Gegenstandes hängt der Gegenstand an der Klammer und dem Greifer derart nach unten, dass zwei gegenüberliegende Seiten bzw. Ränder des Gegenstandes parallel zueinander ausgerichtet sind. Bei der aufspannenden Bewegung bewegt sich der Greifer auf einer Kugelhülle um die Klammer bzw. um den durch die Klammer ergriffenen Bereich des Gegenstandes herum.

Der Radius der Kugelhülle entspricht gerade dem Abstand zwischen der Klammer und dem Greifer. Durch das Konstanthalten des Abstandes wird vermieden, dass das Wäschestück nicht aus der Klammer bzw. dem Greifer herausgerissen wird. Gleichermaßen wird durch diese Bewegung garantiert, dass der Gegenstand derart aufgespannt wird, dass die beiden gegenüberliegenden Ränder parallel ausgerichtet sind und der Gegenstand aufgespannt nach unten hängt ohne dabei Falten zu schlagen.

Weiter ist es bevorzugt vorgesehen, dass der Gegenstand von dem Roboterarm mit dem Greifer parallel zu einer Transportrichtung des Förderers in einem aufgespannten Zustand aufgespannt wird, wobei die beiden wenigstens nahezu parallelen Ränder bzw. Kanten quer, insbesondere senkrecht, und eine untere Kante oder ein unterer Rand des Gegenstandes wenigstens nahezu parallel zu der Transportrichtung des Förderers orientiert werden. Durch die aufspannende Bewegung des Greifers wird der Gegenstand bzw. das Laken in eine Position gebracht, aus der sie auf eine einfache sowie vor allem zuverlässige Art und Weise über den Förderer ablegbar ist.

Alternativ ist es bevorzugt vorgesehen, dass der Gegenstand von dem Roboterarm mit dem Greifer parallel zu einer Transportrichtung des Förderers in einem aufgespannten Zustand aufgespannt wird, während die Klammer bereits auf einer Linearachse in Richtung des Förderers verfahren wird und sich bei dieser Bewegung die beiden Ränder wenigstens nahezu parallel zueinander und quer, insbesondere senkrecht, und ein unterer Rand wenigstens nahezu parallel zu der Transportrichtung das Förderers ausrichten. Bei dieser bereits auf den Förderer zu bewegender Bewegung der Klammer wird der Greifer stets derart bewegt, dass der Abstand zwischen der Klammer und dem Greifer nie den Radius der vollzogenen Kreisbahn überschreitet. Durch dieses kombinierte Aufspannen und Hinabbewegen lässt sich ein besonders zeiteffizientes Verfahren realisieren. Es ist denkbar, dass die Klammer von dem Schienensystem auf die Linearachse überführt wird. Die Linearachse weist gleichermaßen Antriebe auf, um die Klammer in einer definierten Geschwindigkeit in Richtung des Förderers zu bewegen. Dabei ist die Linearachse vorzugsweise schräg orientiert und führt quer über den Förderer hinweg.

Bevorzugt ist es weiter vorgesehen, dass der Gegenstand aus dem aufgespannten Zustand heraus von der Klammer und dem Greifer über den Förderer abgelegt wird, wobei die Klammer auf einer Linearachse verfahren wird und der Greifer durch den Roboterarm bewegt wird, ohne dass die relative Lage zwischen der Klammer und dem Greifer geändert wird. Idealerweise beträgt der Abstand zwischen der Klammer und dem Greifer stets den Radius der Kreisbewegung bzw. der Kugelhülle bzw. den Abstand zwischen der Klammer und dem Greifer zum Zeitpunkt des Ergreifens des Gegenstandes. Bei dieser herabführenden Bewegung ist eine gedachte Strecke zwischen der Klammer und dem Greifer parallel zu dem Förderer positioniert. Somit wird der Gegenstand parallel über den Förderer hinweg geführt und auf diesem abgelegt.

Insbesondere ist es vorgesehen, dass die Klammer und der Greifer den Gegenstand freigeben, sobald eine Mitte einer der Ränder, vorzugsweise des längeren Rands, über dem Förderer liegt. Wenn der Gegenstand in dieser Stellung freigegeben wird, fällt er in einer besonders bevorzugten Stellung über den Förderer, sodass dieser den Gegenstand zu einer weiteren Behandlungseinrichtung fördern kann.

Insbesondere kann es die Erfindung vorsehen, dass zwei Transportsysteme, vorzugsweise zwei parallele Schienensystem, an Klammern hängende Gegenstände zeitlich versetzt von mindestens einem, vorzugsweise dem gleichen, Greifer ergriffen werden und von gegenüberliegenden Seiten des Förderers auf die beschriebene Weise über selbigen abgelegt werden. Dabei wird der Greifer insbesondere durch den Roboterarm abwechselnd den gegenüberliegenden Schienensystemen zur Verfügung gestellt, sodass abwechselnd Gegenstände, die an unterschiedlichen Schienensystem hängen, aufgespannt und abgelegt werden können.

Es ist auch denkbar, die Klammern an den zwei Transportsystemen, vorzugsweise den beiden parallelen Schienen, vollständig asynchron zueinander bewegen, wobei die Bewegung der Klammern von der Aufnahme der Kameras abhängt und/oder davon ob an den Klammern Gegenstände hängen oder nicht und/oder vom der Eigenbewegung der Gegenstände.

Eine Vorrichtung zur Lösung der eingangs genannten Aufgabe weist die Merkmale des Anspruchs 13 auf. Demnach ist es vorgesehen, dass die Vorrichtung insbesondere derart ausgebildetes, dass sie das Verfahren gemäß Anspruch 1 durchführen kann. Diese Vorrichtung zum Zuführen rechteckiger textiler Gegenstände, insbesondere Wäschestücke, vorzugsweise Laken, Tischdecken oder dergleichen, ist gekennzeichnet durch ein mindestens eine Schiene oder mindestens einen Roboter aufweisendes Transportsystem, an dem die Klammer zur Förderung der textilen Gegenstände zu einer Aufziehposition bewegbar ist. Außerdem weist diese Vorrichtung mindestens ein Greifsystem mit einem Greifer zum gezielten Erfassen einer Schlaufe des textilen Gegenstandes und zum Aufspannen und Aufziehen des Gegenstandes auf. Des Weiteren weist die Vorrichtung ein Kamerasystem zur Ermittlung der Schlaufe auf. Die Klammer und der Greifer sind synchronisiert bewegbar, wobei sich die Klammer bei dieser Bewegung entlang einer Linearachse, die Teil der Vorrichtung ist, bewegt. Bei dieser synchronisierten Bewegung befindet sich der aufgespannte oder der aufzuspannende Gegenstand zwischen der Klammer und dem Greifer. Durch diese Vorrichtung wird unter Verwendung einer Klammer und eines Greifers, die einem Schienensystem bzw. einem Greifsystem zugeordnet sind, der textile Gegenstand auf eine sehr einfache und somit zeiteffiziente, aber auch zuverlässige Art und Weise aufgespannt und einem Förderer zugeführt, sodass der Gegenstand direkt einer weiteren Behandlungseinrichtung zuführbar ist.

Ein besonders bevorzugtes Ausführungsbeispiel der Erfindung sieht es weiter vor, dass der an der Klammer hängende Gegenstand durch mindestens eine, zwei oder mehr Kameras, vorzugsweise eine 3-D Kamera, aufgenommen wird. Dazu ist die eine bzw. sind die Kameras unmittelbar neben der Schiene positioniert, sodass ein ausreichend genaues Abbild des Wäschestücks erzielbar ist. Die mindestens eine Kamera ist derart relativ zu dem Gegenstand zu positionieren, dass sie die potentielle Position der Schlaufe sieht. Alternativ zur Verwendung mehrerer Kameras ist es denkbar, dass die Klammer an einem drehbaren Schlitten angeordnet ist, der drehbar ist, sofern durch die mindestens eine Kamera keine geeignete Position zum Ergreifen des Gegenstandes ermittelt werden kann. Die Bilderkennung kann bei diesem erfindungsgemäßen Verfahren über ein Steuersystem bzw. einen Prozessor erfolgen, welcher der Vorrichtung direkt zugeordnet ist oder die zentral auf einem Server installiert ist.

Ergänzend kann es die Erfindung vorsehen, dass die in der Schiene hängende Klammer um +/- 45°, +/- 90° oder +/- 180° drehbar gelagert ist und die Drehung automatisch oder aufgrund einer sich ändernden Reibung oder einer Bremsung erfolgt. Das Schienensystem bzw. die Klammer sind derart ausgebildet, dass sie durch das Steuersystem ansteuerbar und in ihrer Bewegung beeinflussbar sind. Dazu können dem Schienensystem Aktuatoren zugeordnet sein, welche die Bewegung der Schlitten gezielt manipulieren.

Ein weiteres vorteilhaftes Ausführungsbeispiel der Erfindung kann es vorsehen, dass der Greifer an einem Roboterarm, vorzugsweise zur Durchführung einer Bewegung im dreidimensionalen Raum, angeordnet ist und dieser Roboterarm einer, zwei oder mehr Schienensystemen zugeordnet ist. Schließlich ist es erfindungsgemäß denkbar, dass der Roboterarm zwischen zwei Schienensystemen angeordnet ist, sodass der Roboterarm abwechselnd die beiden Schienen bedienen kann und die textilen Gegenstände, die an unterschiedlichen Schienensystem hängen, abwechselnd ergreifen und aufspannen kann.

Ein bevorzugtes Ausführungsbeispiel der Erfindung wird nachfolgend anhand der Zeichnung näher erläutert. In dieser zeigen:
- Fig. 1: eine perspektivische Darstellung einer Vorrichtung,
- Fig. 2: eine Teildarstellung der Vorrichtung gemäß Fig. 1,
- Fig. 3: eine Teildarstellung der Vorrichtung gemäß Fig. 1 nach einem weiteren Verfahrensschritt, und
- Fig. 4: eine Teildarstellung der Vorrichtung gemäß Fig. 1 nach einem letzten Verfahrensschritt.

Die in den Figuren beispielhaft wiedergegebene Vorrichtung 10 dient dem Zuführen rechteckiger textiler Gegenstände zu einer Eingabeeinrichtung. Bei diesen Gegenständen handelt es sich bevorzugt um Wäschestücke bzw. Laken 11, Tischdecken oder dergleichen. Diese Gegenstände sind alle biegeschlaff ausgebildet und weisen gemäß ihrer rechteckigen Form vier Eckbereiche 12 mit jeweils einer Ecke 13 auf. Die Eckbereiche 12 bilden jeweils die Bereiche um die Ecken 13 herum. Wenn ein textiler Gegenstand bzw. konkret ein Laken 11 an einem Eckbereich 12 gehalten wird, hängt das Laken senkrecht nach unten. Dabei bildet ein benachbarter Eckbereich 12 eine Schlaufe 14 aus. Bei dieser Schlaufe 14 handelt es sich letztendlich um einen umgeschlagenen Eckbereich 12. Zwischen den Ecken 13 weist das Laken 11 jeweils eine Kante oder einen Rand 15 auf. Aufgrund der rechteckigen Form besitzt jedes Laken 11 vier Ränder 15. Der Bereich, der sich geringfügig von den Rändern 15 aus auf das Laken 11 erstreckt, wird als Randbereich 16 bezeichnet.

Aufgrund der großflächigen Form der Wäschestücke bzw. der Laken 11 war es bisher schwierig, die Laken wenigstens semi-automatisch einer Eingabeeinrichtung oder einer Behandlungseinrichtung zuzuführen. In der Regel befindet sich die hier beschriebene Vorrichtung 10 zwischen einer Einrichtung zum Waschen der Wäschestücke und einer Vorrichtung zur Weiterbehandlung, insbesondere Trocknen und/oder Falten. Die Laken 11 kommen gewaschen sowie vereinzelt an der Vorrichtung 10 an und werden aufgespannt bzw. abgelegt, so dass sie auf eine vorteilhafte Art und Weise an eine Einrichtung zur weiteren Bearbeitung der Laken 11 übergeben werden können.

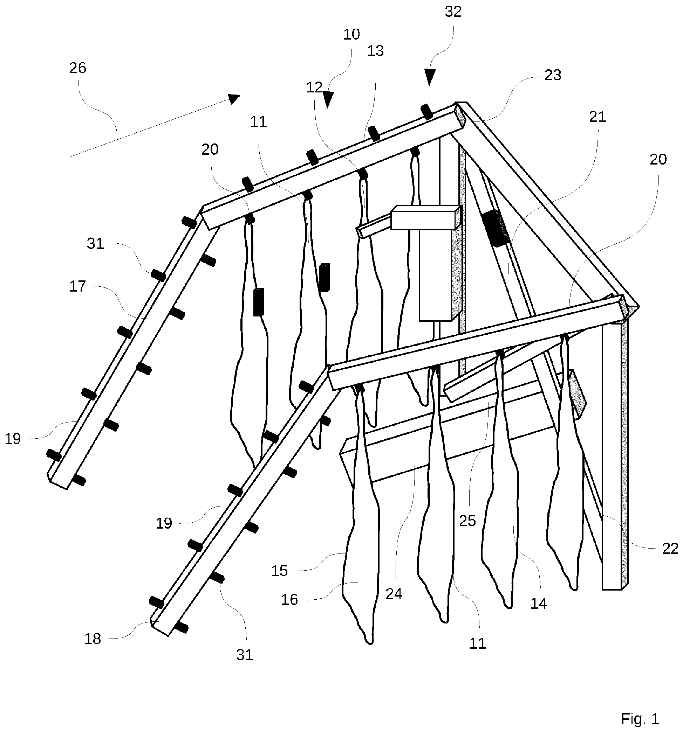

Die hier beschriebene Vorrichtung 10 weist im Wesentlichen ein Transportsystem auf, das bei dem in den Fig. 1 bis 4 dargestellten Ausführungsbeispiel zwei Schienen 17, 18 aufweist. Diese Schienen 17, 18 sind parallel zueinander ausgerichtet und bestehen aus zwei Abschnitten, nämlich einem ersten Abschnitt 19 und einem zweiten horizontalen Abschnitt 20. Die Schienen 17, 18 weisen eine Vielzahl von Klammern 31 auf, die durch einen Antrieb umlaufend an den Schienen 17, 18 bewegt werden. Diese Klammern 31 sind derart ausgebildet, dass sie einen textilen Gegenstand bzw. ein Laken 11 halten und transportieren können. Dazu können die Klammern 31 automatisch geschlossen und geöffnet werden. Ein besonderes Ausführungsbeispiel kann es vorsehen, dass die Klammern 31 an den Schienen 17, 18 gezielt drehbar ausgebildet sind bzw. gedreht werden können.

An den Endbereichen der zweiten Abschnitte 20 schließt sich bei dem hier dargestellten Ausführungsbeispiel jeweils eine Linearachse 21, 22 an. Diese Linearachsen 21, 22 sind diagonal ausgerichtet und verlaufen von dem Ende der zweiten Abschnitte 20 schräg nach unten, sodass sie untereinander ein X bilden.

Bei dem hier dargestellten Ausführungsbeispiel sind die Schienen 17, 18 senkrecht zu den Linearachsen 21, 22 orientiert. Es ist aber auch denkbar, dass die Schienen 17, 18 und die Linearachsen 21, 22 beliebig bzw. quer oder parallel zueinander ausgerichtet sind. Die Klammern 31 werden entweder direkt in die Linearachsen 21, 22 übergeben bzw. überführt oder die Linearachsen 21, 22 weisen ebenfalls Klammern oder einen Schlitten 33 auf, welche ebenfalls dazu ausgebildet sind, Wäschestücke bzw. Laken 11 zu ergreifen. Zur Stabilisierung sind bei dem hier dargestellten Ausführungsbeispiel die Linearachsen 21, 22 in einem Rahmen 23 angeordnet bzw. befestigt.

Bei dem hier dargestellten Ausführungsbeispiel der Vorrichtung 10 befindet sich zwischen den Schienen 17, 18 ein parallel zu den Schienen 17, 18 ausgerichteter Förderer 24. Dieser Förderer 24 weist im Wesentlichen ein Förderband 25 auf, dass in Transportrichtung 26 bewegbar ist. Dieser Förderer 25 ist außerdem derart positioniert, dass er durch einen unteren offenen Quadranten der X-förmig arrangierten Linearachsen 21, 22 hindurchführt.

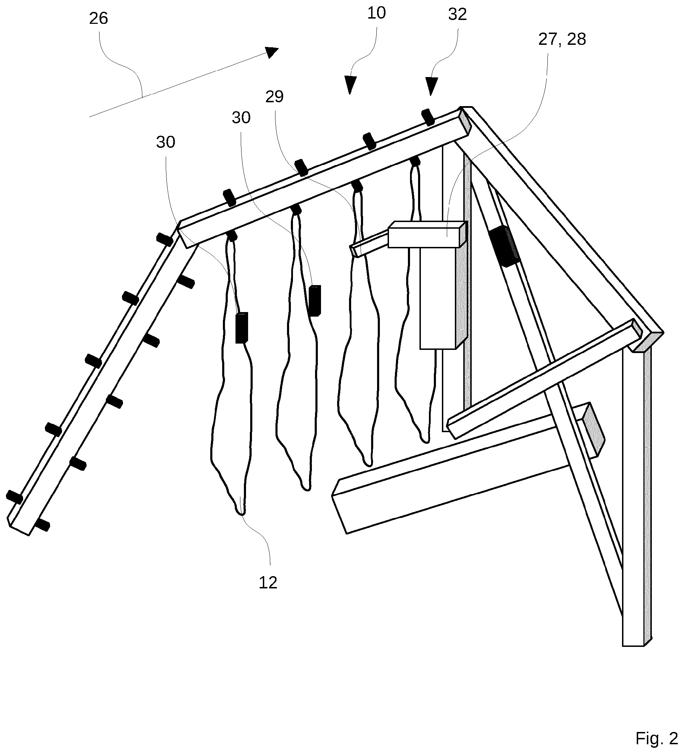

Zwischen den Schienen 17, 18 befindet sich ein Roboter 27 mit einem Roboterarm 28. An dem Roboterarm befindet sich ein Greifer 29, welcher derart ausgebildet ist, dass er einen Bereich, insbesondere einen Eckbereich 12, einer Schlaufe 14 oder eines Randbereichs-16 des textilen Gegenstandes bzw. des Lakens 11 ergreifen kann. Der Roboter 27 bzw. der Roboterarm 28 ist mehrachsiges ausgebildet, sodass der Greifer 29 jede Position im dreidimensionalen Raum anfahren kann. Für eine bessere Veranschauung ist der Roboter 27 in den Fig. 1 und 2 lediglich zwischen den Schienen 17, 18 positioniert, ohne dass dargestellt wird, wie der Roboter 27 befestigt ist. In der Regel ist der Roboter 27 an einer Decke befestigt oder an einer entsprechenden Halterung, die wiederum mit dem Boden oder dem Rahmen 23 verbunden sein kann.

Schließlich befinden sich zwischen den Schienen 17, 18 Kameras 30. Bei diesen Kameras 30 kann es sich um einfache oder 3-D Kameras handeln. Es ist auch denkbar, dass mehrere Kameras derart zusammengeschaltet werden, dass sie ein dreidimensionales Abbild eines aufzunehmenden Objektes abbilden können. Bei dem hier dargestellten Ausführungsbeispiel sind die Kameras 30 in einem gewissen Abstand derart zwischen den Schienen 17, 18 positioniert, dass sie in Transportrichtung 26 betrachtet vor dem Roboter 27 positioniert sind und auf die Wäschestücke gerichtet sind. Durch diese vorzeitige Aufnahme der einzelnen Wäschestücke bzw. Laken 11 lassen sich bereits Informationen generieren, die für die Steuerung des Roboters 27 wesentlich sind.

Die Vorrichtung 10 weist außerdem eine nicht dargestellte Steuerung auf. Durch diese Steuerung werden sowohl die Bewegung der Klammern 31 und des Roboters 27 bzw. des Greifers 29 gesteuert. Insbesondere die Ansteuerung des Greifers erfolgt aufgrund der Informationen, welche von der Steuerung aus den Kameras 30 ausgelesen werden. Die Steuerung kann insbesondere unter Anwendung einer Mustererkennung bzw. eines neuronalen Netzwerkes bevorzugte Positionen an dem Laken 11 erkennen und den Greifer 29 entsprechend an diese Positionen heranfahren, um das Wäschestück zu ergreifen. Bei dieser bevorzugten Position handelt es sich vorzugsweise um die Schlaufe 14. Das Verfahren kann es aber durchaus auch vorsehen, dass das Wäschestück bzw. das Laken 11 an einer anderen Position ergriffen wird.

Anhand der Fig. 2 bis 4 soll im Folgenden das Verfahren zur automatischen Zuführung des rechteckigen textilen Gegenstandes bzw. des Lakens 11 beschrieben werden. Für eine bessere Übersicht wurde in den Fig. 2 bis 4 auf die Darstellung der zweiten Schiene verzichtet. Die Laken 11 werden zunächst - dieser Schritt ist nicht dargestellt - manuell oder automatisch mit einem Eckbereich 12, vorzugsweise mit einer Ecke 13, an einem vorderen Ende des ersten Abschnitts 19 der Schiene 17 einer Klammer 31 zugeführt. Das Transportsystem bzw. die Schiene 17 bewegen das an der Klammer 31 hängende Laken 11 sodann in Transportrichtung 26 entlang des ersten Abschnitts 19 und des zweiten Abschnitt 20 zu einer Aufziehposition 32. Durch die Vielzahl hintereinander angeordneter Klammern 31 wird entsprechend eine Vielzahl an Wäschestück bzw. Laken 11 entlang der Schiene 17 transportiert. Das Gleiche gilt natürlich auch für die nicht dargestellte Schiene 18. Es ist denkbar, dass die Klammern 31 der beiden Schienen 17, 18 versetzt zueinander verlaufen, sodass die Laken 11 zu unterschiedlichen Zeiten in der Aufziehposition 32 ankommen. Dies kann sich insbesondere für die weitere Handhabung der Laken 11 mittels dem Roboter 27 positiv auswirkt.

Während die Laken 11 entlang der Schiene 17 transportiert werden, passieren sie nacheinander eine oder mehrere Kameras 30. Es ist denkbar, dass der Transport der Laken 11 kurz unterbrochen wird, damit eine Aufnahme des Lakens 11 von der mindestens einen Kamera 30 durchgeführt werden kann. Gleichermaßen ist es denkbar, dass die Aufnahme des Lakens 11 während des Transports erfolgt.

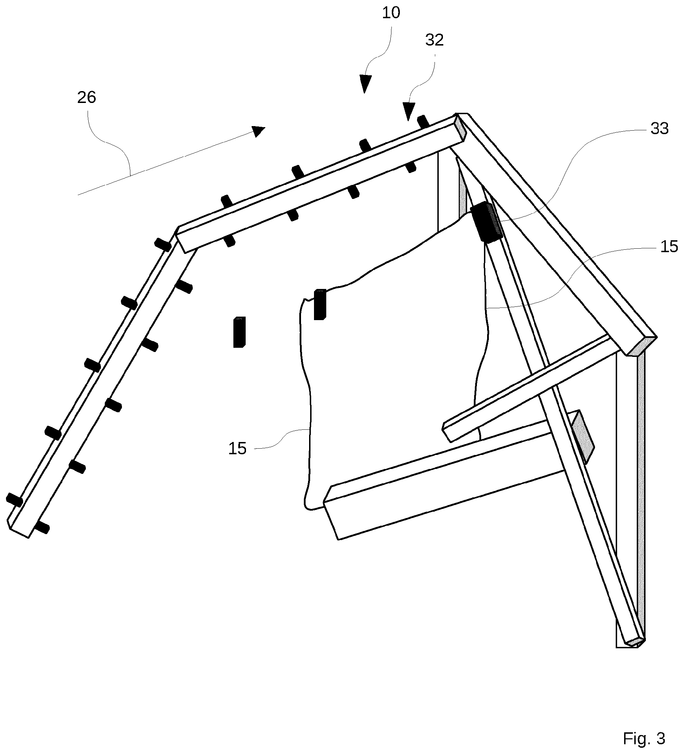

Die mindestens eine Kamera 30 ermittelt vorzugsweise eine Schlaufe 14 des Lakens 11, an die sodann der Greifer 29 herangeführt wird. Dies erfolgt in der Aufziehposition 32 des Lakens 11, also ganz am Ende des zweiten Abschnitts 20. Gleichermaßen ist es aber auch denkbar, dass dies Ergreifen noch während des Transportes des Lakens 11 an der Schiene 17 erfolgt. Der Roboterarm 28 bzw. der Greifer 29 verschwenken das Laken 11 an der ergriffenen Schlaufe 14 auf einer Kreisbahn entgegen der Transportrichtung 26, sodass sich zwischen der Klammer 31, an welcher das Laken 11 hängt, und dem Greifer 29 ein Abstand ausbildet. Dieser Abstand entspricht gerade dem Abstand zwischen dem durch die Klammer 31 erfassten Eckbereich 12 und der Schlaufe 14 bzw. dem Greifer 29 zum Zeitpunkt des Ergreifens der Schlaufe 14. Dadurch, dass die Schlaufe 14 auch einen Eckbereich 12 darstellt und durch das kreisartige Aufspannen des Lakes 11 bilden sich zwei parallele Ränder 15 des Lakens 11 herabhängend nach unten aus. Dies ist schematisch in der Fig. 3 dargestellt, wobei hier für ein besseres Verständnis auf die Darstellung des Roboters 27 verzichtet wurde. Das Laken 11 ist nun bei dem hier dargestellten Ausführungsbeispiel parallel zu der Schiene 17 sowie parallel zu dem Förderer 24 aufgespannt. Dadurch, dass der Greifer in einem Abstand zu der Klammer fährt, der gerade dem anfänglichen Abstand zwischen dem Eckbereich 12 und der Schlaufe 14 entspricht, wird das Laken 11 weder aus der Klammer 31 noch aus dem Greifer 29 bei der aufsteigenden Bewegung gerissen. Vielmehr wird durch diese Bewegung das Laken 11 in seiner vollen Breite ausgebreitet.

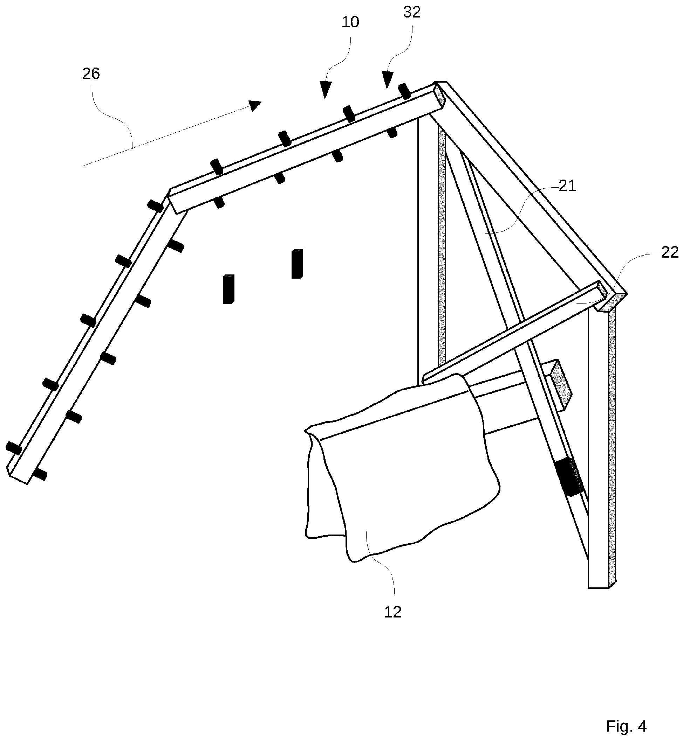

Im nächsten Schritt wird nun das Laken 11 an einer Klammer 31 oder einem Schlitten 33 der Linearachse 21 und dem Greifer 29 hängend parallel zu dem Förderer 24 dem Verlauf der Linearachse 21 folgend nach unten bewegt. Dabei wird der Abstand zwischen dem Greifer 29 und der Klammer 31 bzw. dem Schlitten 33 stets konstant gehalten. Durch dieses Aufziehen wird das Laken 11 in seinem ausgebreiteten Zustand auf dem Förderer 24 bzw. dem Förderband 25 abgelegt. Sobald die Ränder 15 des Lakens 11 wenigstens in etwa mit ihrer Mitte über dem Förderer 24 liegen, wird das Laken 11 von dem Greifer 29 bzw. der Klammer 31 oder dem Schlitten 33 freigegeben. Das Laken 11 befindet sich jetzt auf dem Förderer 24 und kann in Transportrichtung 26 der weiteren Bearbeitungseinrichtung zugeführt werden (Fig. 4).

Nach Beendigung dieses letzten Verfahrensschritts kann entweder ein weiteres Laken 11 der gleichen Schiene 17 über den Förderer abgelegt werden oder im Wechsel ein Laken 11 von der Schiene 18 dem Förderer 24 zugeführt werden.

### Bezugszeichenliste:

- 10: Vorrichtung
- 11: Laken
- 12: Eckbereich
- 13: Ecke
- 14: Schlaufe
- 15: Rand
- 16: Randbereich
- 17: Schiene
- 18: Schiene
- 19: erster Abschnitt
- 20: zweiter Abschnitt
- 21: Linearachse
- 22: Linearachse
- 23: Rahmen
- 24: Förderer
- 25: Förderband
- 26: Transportrichtung
- 27: Roboter
- 28: Roboterarm
- 29: Greifer
- 30: Kamera
- 31: Klammer
- 32: Aufziehposition
- 33: Schlitten

## Patentansprüche

1. Verfahren zum automatischen Zuführen rechteckiger textiler Gegenstände, insbesondere Wäschestücke, vorzugsweise Laken (11), Tischdecken oder dergleichen, zu einer Eingabeeinrichtung, wobei ein jeweiliger vereinzelter textiler Gegenstand an einem Abschnitt eines Rands ergriffen und über einen den textilen Gegenstand zur Eingabeeinrichtung transportierenden Förderer (24) aufgezogen wird, **dadurch gekennzeichnet, dass** der textile Gegenstand an einem Eckbereich (12), insbesondere an einer Ecke (13), in einer Klammer (31) hängend einer Aufziehposition (32) zugeführt und in dieser Aufziehposition (32) eine obere Schlaufe (14) des hängenden textilen Gegenstandes ermittelt wird, wobei ein Greifer (29) diese obere Schlaufe (14) erfasst und den an der Klammer (31) hängenden textile Gegenstand ,vorzugsweise das Wäschestück, aufspannt und der Greifer (29) und die Klammer (31) den textilen Gegenstand in einer synchronisierten Bewegung über den Förderer (24) ziehen.

2. Verfahren nach Anspruch 1, **dadurch gekennzeichnet, dass** der eine oder mehrere beabstandete textile Gegenstände an einem Transportsystem, vorzugsweise einem Schienensystem mit Schienen 17, 18 oder einem Greifer eines Roboterarmes, hängend der Aufziehposition (32) zugeführt werden.

3. Verfahren nach Anspruch 1 oder 2, **dadurch gekennzeichnet, dass** der textile Gegenstand von einer oder zwei oder mehr Kameras (30), vorzugsweise einer 3D-Kamera, insbesondere aus verschiedenen Richtungen erfasst wird und die obere Schlaufe (14) des hängenden Gegenstandes ermittelt wird, wobei dazu insbesondere ein Algorithmus zur Mustererkennung eingesetzt wird.

4. Verfahren nach Anspruch 3, **dadurch gekennzeichnet, dass** für den Fall, in dem keine obere Schlaufe (14) durch die Kamera (30) erkannt wird, der Gegenstand oder die Klammer (31), insbesondere die in der Schiene (17, 18) hängende Klammer (31), vorzugsweise um +/- 45°, +/- 90° oder +/- 180° um eine horizontale Achse gedreht wird, bis eine obere Schlaufe (14) erkannt wird.

5. Verfahren nach einem der vorhergehenden Ansprüche, **dadurch gekennzeichnet, dass** der Greifer (29) automatisch durch einen Roboterarm (28) an die zu ergreifende Schlaufe (14) herangefahren wird.

6. Verfahren nach einem der vorhergehenden Ansprüche, **dadurch gekennzeichnet, dass** der Roboterarm (28) mit dem Greifer (29) eine den Gegenstand aufspannende Bewegung durchführt, wobei die Bewegung derart erfolgt, dass zwei Ränder (15) bzw. Kanten des Gegenstandes wenigstens nahezu parallel zueinander ausgerichtet sind.

7. Verfahren nach Anspruch 6, **dadurch gekennzeichnet, dass** der Greifer (29) mit dem ergriffenen Gegenstand auf einer Kreisbahn bewegt wird, wobei der Radius dieser Kreisbahn durch den Abstand zwischen der Klammer (31) und dem Greifer (29) gebildet wird.

8. Verfahren nach Anspruch 6 oder 7, **dadurch gekennzeichnet, dass** der Gegenstand von dem Roboterarm (28) mit dem Greifer (29) parallel zu einer Transportrichtung (26) des Förderers (24) in einen aufgespannten Zustand aufgespannt wird, wobei die beiden wenigstens nahezu parallelen Ränder (15) bzw. Kanten quer, insbesondere senkrecht, und eine untere Kante oder ein unterer Rand des Gegenstandes wenigstens nahezu parallel zu der Transportrichtung (26) des Förderers (24) orientiert werden.

9. Verfahren nach Anspruch 6 oder 7, **dadurch gekennzeichnet, dass** der Gegenstand von dem Roboterarm (28) mit dem Greifer (29) parallel zu einer Transportrichtung (26) des Förderers (24) in einen aufgespannten Zustand aufgespannt wird, während die Klammer (31) bereits auf einer Linearachse (21, 22) in Richtung Förderer (24) verfahren wird und sich bei dieser Bewegung die beiden Ränder (15) wenigstens nahezu parallel zueinander und quer, insbesondere senkrecht, und ein unterer Rand wenigstens nahezu parallel zu der Transportrichtung (26) des Förderers (24) ausrichten.

10. Verfahren nach Anspruch 8 oder 9, **dadurch gekennzeichnet, dass** der Gegenstand aus dem aufgespannten Zustand heraus von der Klammer (31) und dem Greifer (29) über den Förderer (24) abgelegt wird, wobei die Klammer (31) auf einer Linearachse (21, 22) verfahren wird und der Greifer (29) durch den Roboterarm (28) bewegt wird, ohne dass die relative Lage zwischen der Klammer (31) und dem Greifer (29) geändert wird.

11. Verfahren nach einem der vorhergehenden Ansprüche, **dadurch gekennzeichnet, dass** die Klammer (31) und der Greifer (29) den Gegenstand freigeben, sobald eine Mitte einer der Ränder (15), vorzugsweise des längeren Rands (15), über dem Förderer (24) liegt.

12. Verfahren nach einem der vorhergehenden Ansprüche, **dadurch gekennzeichnet, dass** an zwei Transportsystemen, vorzugsweise zwei parallelen Schienen (17, 18), an Klammern (31) hängende Gegenstände zeitlich versetzt von mindestens einem, vorzugsweise dem gleichen, Greifer (29) ergriffen werden und von gegenüberliegenden Seiten des Förderers (24) auf die beschriebene Weise über selbigen abgelegt werden und/oder **dadurch gekennzeichnet, dass** die Klammern (31) an den zwei Transportsystemen, vorzugsweise den beiden parallelen Schienen (17, 18), vollständig asynchron zueinander bewegen, wobei die Bewegung der Klammern (31) von der Aufnahme der Kameras (30) abhängt und/oder davon ob an den Klammern (31) Gegenstände hängen oder nicht und/oder vom der Eigenbewegung der Gegenstände.

13. Vorrichtung (10) zum Zuführen rechteckiger textiler Gegenstände, insbesondere Wäschestücke, vorzugsweise Laken (11), Tischdecken oder dergleichen, zu einer Eingabeeinrichtung, insbesondere zur Durchführung des Verfahrens gemäß Anspruch 1, wobei ein jeweiliger vereinzelter an einer Klammer (31) hängender textiler Gegenstand an einem Abschnitt eines Rands ergreifbar und über einen den textilen Gegenstand zur Eingabeeinrichtung transportierenden Förderer (24) aufziehbar ist, **gekennzeichnet durch** ein mindestens eine Schiene (17, 18) oder mindestens einen Roboter aufweisendes Transportsystems, an dem die Klammer (31) zur Förderung der textilen Gegenstände zu einer Aufziehposition (32) bewegbar ist, durch mindestens ein Greifsystem mit einem Greifer (29) zum gezielten Erfassen einer Schlaufe (14) des textilen Gegenstandes und zum Aufspannen und Aufziehen des Gegenstandes und durch ein Kamerasystem zur Ermittlung der Schlaufe (14) und durch mindestens eine Linearachse (21, 22), entlang der die Klammer (31) synchronisiert mit dem Greifer (29) bewegbar ist, wobei zwischen der Klammer (31) und dem Greifer (29) der Gegenstand aufgespannt transportierbar ist.

14. Vorrichtung (10) nach Anspruch 13, **dadurch gekennzeichnet, dass** das Transportsystem zwei parallele Schienen (17, 18) aufweist, an denen Klammern (31) zur Förderung der textilen Gegenstände angeordnet und förderbar sind und/oder einen Roboter mit einem Roboterarm, an dem einer Greifer zur Förderung der textilen Gegenstände angeordnet und förderbar sind.

15. Vorrichtung (10) nach Anspruch 13 oder 14, **gekennzeichnet durch** mindestens eine oder zwei oder mehr Kameras (30), vorzugsweise einer 3D-Kamera, zum Erfassen einer oberen Schlaufe (14) des hängenden Gegenstandes, wobei die mindestens eine Kamera (30) mit einem Prozessor zur Bildvereinbarung, insbesondere unter Anwendung von Mustererkennung oder künstlicher Intelligenz, verbunden ist.

16. Vorrichtung (10) nach einem der Ansprüche 13 bis 15, **dadurch gekennzeichnet, dass** die in der Schiene (17, 18) hängende Klammer (31) um +/- 45°, +/- 90° oder +/- 180° drehbar gelagert ist und die Drehung automatisch oder aufgrund einer sich ändernden Reibung oder einer Bremsung erfolgt.

17. Vorrichtung (10) nach einem der Ansprüche 13 bis 16, **dadurch gekennzeichnet, dass** der Greifer (29) an einem Roboterarm (28), vorzugsweise zur Durchführung einer Bewegung im dreidimensionalen Raum, angeordnet ist und dieser Roboterarm (28) einer, zwei oder mehr Schienen (17, 18) zugeordnet ist und/oder, **dadurch gekennzeichnet, dass** der Roboterarm (28) zwischen zwei Schienen (17, 18) angeordnet ist, so dass der Roboterarm (28) abwechselnd die beiden Schienen (17, 18) bedienen kann und die textilen Gegenstände, die an unterschiedlichen Schienen (17, 18) hängen, abwechselnd ergreifen und aufspannen kann.
